# EUROPEAN PATENT SPECIFICATION

(11) **EP 3 104 941 B1**
(45) Date of publication and mention of the grant of the patent: **17.04.2019**
(21) Application number: 15708953.3
(22) Date of filing: 13.02.2015
(51) Int. Cl.: A62D 3/40, B01J 19/24, B01D 53/66, F23G 5/10

(54) **METHOD AND APPARATUS FOR A DIRECTLY ELECTRICALLY HEATED FLOW-THROUGH CHEMICAL REACTOR**
VERFAHREN UND VORRICHTUNG FÜR DIREKT ELEKTRISCH BEHEIZTEN DURCHFLUSSREAKTOR
PROCÉDÉ ET APPAREIL POUR UN RÉACTEUR CHIMIQUE À FLUX TRAVERSANT DIRECTEMENT CHAUFFÉ ÉLECTRIQUEMENT

(30) Priority: 14.02.2014 US 201461956189 P; 25.02.2014 US 201414189649
(43) Date of publication of application: 21.12.2016
(73) Proprietor: MKS Instruments, Inc., Andover, MA 01810 (US)
(72) Inventor: SEIWERT, Johannes, 13355 Berlin (DE); GOTTSCHALK, Christiane, 13353 Berlin (DE); LOHR, Joachim, 10717 Berlin (DE); BLACHA, Martin, 10247 Berlin (DE)
(74) Representative: Lang, Johannes
(86) International application number: PCT/US2015/015914
(87) International publication number: WO 2015/123578

(56) References cited:
- AU-B2- 678 986
- CN-Y- 201 135 883
- GB-A- 395 709
- US-A- 4 688 495

## Description

### Cross Reference to Related Application

This application claims priority to U.S. Patent Application No. 14/189,649, filed on February 25, 2014, which also claims the benefit of and priority to U.S. Provisional Patent Application No. 61/956,189, filed on February 14, 2014, both of which are owned by the assignee of the instant application.

### Field of the Invention

This invention relates generally to devices, systems, and methods employed in chemical vapor deposition (CVD) and wet wafer processing applications. In particular, the invention relates to directly coupling a conductive member to an electrical power source to heat the conductive member in order to create a chemical reaction from one or more chemical substances disposed within the conductive member.

### Background of the Invention

When manufacturing semiconductor devices, a variety of chemicals are used. Chemical substances can be used to etch wafers, clean chambers, and in countless other operations that occur during semiconductor device manufacturing.

Many of the chemical substances used during semiconductor device manufacturing processes need to be heated. One example is ozone excess gas. Ozone gas can be used to create ozonated deionized water that can be used for wafer surface cleaning, passivation, native oxide removal and/or removal of photoresist It can be harmful to release ozone gas into the environment, making it desirable to destruct the ozone excess gas. The application of heat can cause the ozone gas to be destructed into oxygen. By exposing ozone to temperatures of over 250° C, the ozone gas can be destructed. By destructing the ozone gas, the release of harmful chemical substances into the environment can be avoided.

Other chemical substances that can require heating during the manufacture of semiconductor devices are fluorine compounds, such as CxFy, NF3, CHF3, and SF6. Other gases may also require heating.

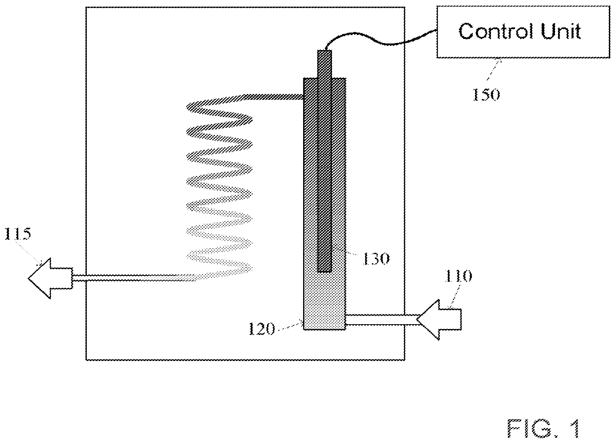

Current methods and apparatus for heating chemical substances during semiconductor manufacturing include heating a chemical reactor using a heating clement. For example, FIG. 1 is a schematic representation of an exemplary system 100 for destructing ozone according to the prior art. The system 100 includes an input 110, an output 115, a tube 120, a heating clement 130, a cooling element 140, and a control unit 150. In operation, the control unit 150 heats the heating element 130 to a desired temperature. As such, a chemical substance (e.g. ozone) directed through the chemical input 110 into the tube 120 is heated by the element 130. Once heated, the chemical substance flows through the cooling element 140, which cools the chemical substance before it exits the system via output 115.

One problem with system 100 is that the tube 120 may need to be welded or otherwise manipulated (e.g., bent) causing the heat distribution to the chemical substance to be non-uniform. In addition, portions of the tube 120 can have unwanted condensation build-up and dead-ends, further contributing non-uniform heat distribution.

Current methods can also have a longer than desirable heat-up time due to, for example, additional heat resistance caused by the presence of a heating element. Current methods and apparatus' can be very expensive, large, and/or heavy due to, for example, size, cost and/or weight of a heating element

Another problem is that existing thermal reactors typically do not have good chemical resistance and/or cannot operate over a range of chemical substances, due to, for example, the inability of heating elements to withstand chemicals having a high corrosion. Poor chemical resistance can result in premature corrosion of a reactor.

Another problem with current methods is that for ozone destruction, the ozone conversion rate from ozone gas into oxygen can be less than 95%.
CN 201 135 883 Y, US 4 688 495 A and GB 395 709 A disclose systems relating to the features of the preamble of the independent claims.

### Statement of Invention

The present invention is defined by the features of the independent claims. Preferred advantageous embodiments thereof are defined by the sub-features of the claims dependent thereon.

### Summary of the Invention

The invention includes heating a chemical mixture disposed within a heated electrically conductive member (e.g., an electrically conductive chemical reactor). The chemical reactor is heated by directly electrically coupling the chemical reactor to a power source. When the power source is turned on, the chemical reactor functions as a heating element with respect to the chemical mixture disposed within the reactor.

One advantage of the invention is that heating, reacting and housing of chemical substances can all be achieved with the same structural component (e.g., the electrically conductive member). Heating the chemical mixture by heating the chemical reactor allows for elimination of a separate heating element. As such, another advantage of the invention is reduced size and/or cost.

Other advantages of the invention include a more uniform heat distribution and a shorter heating-up time. These advantages are achieved by eliminating the heating element that creates additional resistance in the system. Another advantage of the invention is that the system has improved chemical resistance and/or can operate over a range of chemical substances because the chemical reactor alone, and not a separate heating element, is subject to the chemical substance. Another advantage of the invention is that, for ozone destruct applications, the ozone conversion from ozone gas into oxygen can be greater than 95% because of more uniform heat distribution and quicker heat up time. Another advantage of the invention is the minimization of condensation build-up due to substantially complete uniform heated chemical reactor and the elimination of dead volumes by the one tube design of the reactor.

In one aspect, the invention involves a method of facilitating a chemical reaction. The method involves directly coupling an electrically conductive member and a source of electrical power, the electrically conductive member having an interior region configured to be substantially resistant to chemical corrosion and capable of retaining a chemical mixture therein. The method also involves providing the chemical mixture to the interior region of the electrically conductive member. The method also involves heating the electrically conductive member to a predetermined temperature by controlling the electrical power applied to the electrically conductive member to cause a chemical reaction within the chemical mixture.

In the method according to the invention, the chemical reaction is ozone destruction. In some embodiments, the method further involves heating the electrically conductive member to a predetermined temperature that is greater than 200 degrees Celsius. In some embodiments, selecting the predetermined temperature based on the chemical mixture, the type of electrically conductive member, or any combination thereof.

In some embodiments, the method involves cooling a section of the electrically conductive member to cool the chemical mixture upon exiting the electrically conductive member. In some embodiments, the electrically conductive member is a metallic tube. In some embodiments, the electrically conductive member is single structure that is electrically and thermally conductive.

In another aspect, the invention involves a system for facilitating a chemical reaction. The system includes a metallic tube that is substantially resistant to chemical corrosion and capable of retaining a chemical mixture therein, the metallic tube having a first section and a second section. The system also includes a power source directly electrically coupled to the metallic tube, the power source being configured to heat the first section of the metallic tube. The system also include a controller electrically coupled to the power source, the controller controls power to the metallic tube such that when the chemical mixture flows into the metallic tube the chemical mixture is heated to cause a chemical reaction within the chemical mixture.

In some embodiments, the power source and metallic tube are coupled by connecting one or more electrical wires to the metallic tube along the first section of the metallic tube. In the system according to the invention, the power source and the metallic tube are coupled by direct induction of electrical power into the metallic tube. In some embodiments, the metallic tube is configured to complete a secondary winding of a transformer. Ion some embodiments, direct inductions is performed by eddy currents.

In some embodiments, the system includes a cooling section connected to the metallic tube along a second section of the metallic tube.

In some embodiments, the second section of the metallic tube is positioned relative to a coil shaped metallic tube that has coolant flowing there through such that the second section of the metallic tube is cooled.

In some embodiments, the system includes a heated section of the first section of the metallic tube that is connected to the second section of the metallic tube is in fluid connection with an inlet of the first portion of the metallic tube such that heat from the heated section of the first section of the metallic tube heats the chemical mixture entering the first portion of the metallic tube.

In some embodiments, the metallic tube is up to 15 meters in length. In some embodiments, the first section of the metallic tube, the second section of the metallic tube or both have a coil shape. In some embodiments, the power source is a transformer. In some embodiments, the transformer has 10 loops on a secondary side of the transformer.

In some embodiments, the power source is a DC source. In some embodiments, the power source is a switching power supply. In some embodiments, the power source is a controlled source.

### Brief Description of the Drawings

The advantages of the invention described above, together with further advantages, may be better understood by referring to the following description taken in conjunction with the accompanying drawings. The drawings are not necessarily to scale, emphasis instead generally being placed upon illustrating the principles of the invention.
FIG. 1 is a schematic representation of an exemplary system for destructing ozone, according to the prior art.
FIG. 2 is a schematic representation of a system for facilitating a chemical reaction, according to an illustrative embodiment of the invention.
FIG. 3 is schematic representation of a system for facilitating a chemical reaction, according to an illustrative embodiment of the invention.
FIG. 4 is a flow diagram for a method of facilitating a chemical reaction, according to an illustrative embodiment of the invention.
FIG. 5 is a schematic representation of a system for facilitating a chemical reaction, according to an illustrative embodiment of the invention.

### Detailed Description

Generally, the invention includes directly coupling an electrically conductive member (e.g., a metallic tube) and a power source. The electrically conductive member is capable of retaining a chemical mixture therein. The power source applies power to the electrically conductive member. The electrically conductive member heats up as a result of the applied power. The electrically conductive member has an interior region that allows for a chemical mixture to flow therethrough.

When a chemical mixture is disposed within the interior region of the electrically conductive member and power is applied, the heat generated in the electrically conductive member transfers to the chemical mixture causing the chemical mixture to be heated. A portion of the electrically conductive member can be cooled. The cooled portion of the electrically conductive member can cool the chemical mixture flowing through the electrically conductive member. The chemical mixture can be cooled, in one embodiment, after the chemical mixture has been heated.

The electrically conductive member can be a metallic tube. The metallic tube can be subdivided in first portion and a second portion. The first portion is directly coupled to a power source. When the power source is turned on, it directly heats the first portion of the metallic tube. The second portion of the metallic tube is cooled by a coolant. The metallic tube formed of a material that is substantially resistant to chemical corrosion (e.g., Alloy 625).

In some embodiments, a clamp is directly electrically connected to the metallic tube. A contact surface between the clamp and the metallic tube can be positioned and sized such that electrical transition resistance is minimized. The clamp can be cooled so that if the metallic tube is fully heated, the clamp can operate within its specified temperature range. In some embodiments, the clamp is cooled by liquid cooling (e.g., water, oil), air cooling (convection cooling) or any combination thereof.

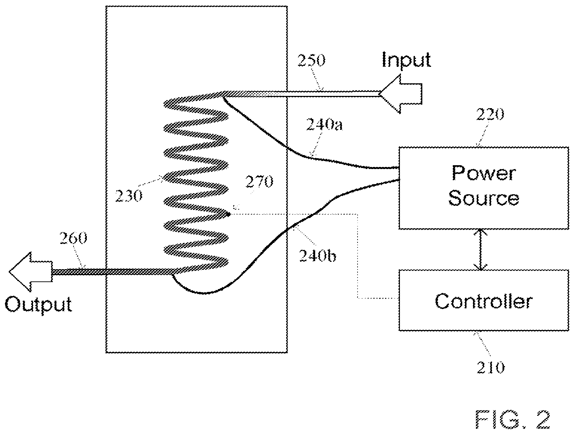

FIG. 2 is a schematic representation of a system 200 for facilitating a chemical reaction, according to an illustrative embodiment of the invention. The system 200 includes a controller 210, a power source 220, an electrically conductive member 230, one or more electrical connectors 240a, 240b, generally, 240, a temperature sensor 270, a fluidic input to the electrically conductive member 250 and a fluidic output to the electrically conductive member 260.

The controller 210 is in communication with the power source 220 and the temperature sensor 270. In some embodiments, the controller 210 is a thermostat. In some embodiments, the power source 220 is controlled by the controller 210 to a temperature set point based on the measurement from the temperature sensor 270. The temperature sensor 270 can be any temperature sensor known in the art that can measure the temperature of the electrically conductive member 250. In some embodiments, the temperature sensor 270 is not present.

In some embodiments, the power source 220 includes a transformer. In some embodiments, the transformer has 10 loops on its secondary side. In various embodiments, the transformer is a step-up transformer, a step-down transformer or a neutral transformer. In various embodiments, the power source is a DC source or a switching power supply.

The power source 220 is electrical connected to the electrically conductive member 230 via electrical connectors 240. In some embodiments, the electrically conductive member 230 is a tube. In some embodiments, the electrically conductive member 230 is coil shaped. In some embodiments, the electrically conductive member 230 has a length up to a few meters. In some embodiments, the length of the electrically conductive member 230 depends on a desired fluid flow range and desired ozone concentration at the outlet.

In some embodiments, a diameter of the electrically conductive member 230 depends on operating conditions of the member. In some embodiments, the electrically conductive member 230 has a diameter up to 5.08 cm.

In some embodiments, the electrically conductive member 230 is metallic. In some embodiments, the electrically conductive member 230 is any metal that is heated when power is applied. In some embodiments, the electrically conductive member 230 is thermally and electrically conductive (e.g., 21° C about 9.8 W/m*°C and about 130*10⁻⁶ Ohm*cm). In some embodiments, the electrically conductive member 230 can maintain its form in the presence of temperatures up to 1000° C. In some embodiments, the electrically conductive member 230 is substantially resistance to corrosion in the presence of HF.

In some embodiments, the electrical connectors 240 are centimeters long. In some embodiments, the electrical connectors 240 are meters long. In some embodiments, the electrical connectors 240 have a resistance that is below the resistance of the electrically conductive member 230. In some embodiments, the resistance of the electrical connectors 240 depends on length, diameter, and/or material of the electrical connectors 240. In some embodiments, the electrical connectors 240 are made of cooper. In various embodiments, the electrical connectors 240 can consist of a material with higher electrical conductivity than the metallic tube (e.g., aluminum, silver, gold).

The electrically conductive member 250 is in fluid communication with a chemical source (not shown) via the fluidic input to the electrically conductive member 250. In some embodiments, the chemical source is an ozone source. In some embodiments, the chemical source provides a chemical mixture. In some embodiments, the chemical source provides a single chemical

The electrically conductive member 250 is in fluid communication with an outlet (not shown) via the fluidic output to the electrically conductive member 260.

During operation, a chemical mixture is input to the electrically conductive member 250. The power source 220 applies a voltage to the electrically conductive member 250. The electrically conductive member 250 heats up, thus the chemical mixture heats up.

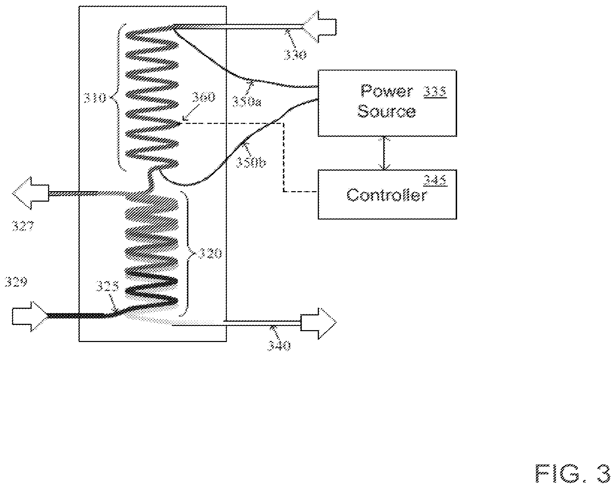

In some embodiments, the electrically conductive member 230 includes a first portion and a second portion. FIG. 3 is schematic representation of a system 300 for facilitating a chemical reaction, according to an illustrative embodiment of the invention. The system 300 includes an electrically conductive member 300 having a first portion 310 and a second portion 320, a cooling tube 325, a power source 335, a temperature sensor 360, a controller 345 and two electrical connectors 350a, 350b.

The electrically conductive member 300 includes a first portion 310, a second portion 320, an inlet 330 and an outlet 340.

The first portion 310 is a coil shaped tube capable of receiving a chemical from at inlet 330. The first portion 310 is electrically connected to the power source 335 via the two electrical connectors 350a, 350b. The first portion is coupled to the temperature sensor 360. The temperature sensor 360 and the power source 335 are both coupled to the controller 345. The controller 345 set a power set point for the power source based on the temperature sensor 360. In some embodiments, the temperature sensor 360 is not present.

The first portion 310 is in fluid communication with the second portion 320. The second portion 320 is a coil shaped tube capable of receiving the output of the first portion 310.

The second portion 320 is enclosed within the cooling tube 325. The cooling tube 325 is capable of receiving cooling water at an inlet 327 such that a coolant flows around an exterior of the second portion 320. The cooling water exits the cooling tube 325 at an outlet 329. The second portion 320 is capable of releasing the chemical mixture at the outlet 340.

In some embodiments, the first portion 310 is surrounded by an insulating material. In some embodiments, the insulation is surrounded by aluminum. In some embodiments, the first portion 310 is 1 meter long. In some embodiments, the second portion 310 is 1 meter long.

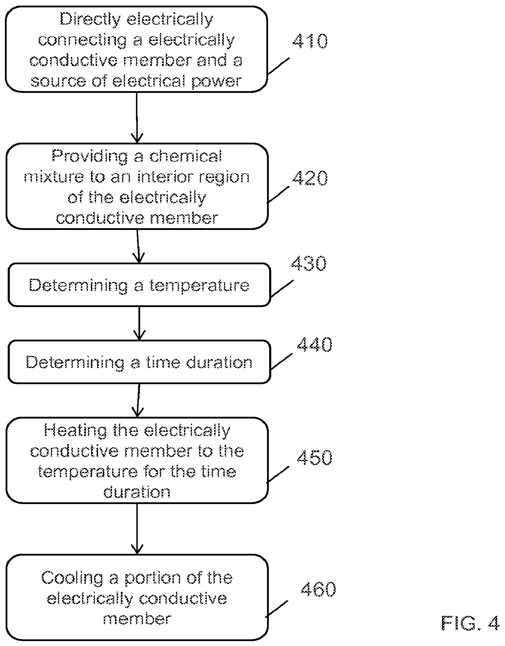

FIG. 4 is a flow diagram 400 for a method of facilitating a chemical reaction, according to an illustrative embodiment of the invention. The method involves directly electrically coupling an electrically conductive member and a source of electrical power (Step 410). For example, as shown in FIG. 2, the electrically conductive member 230 is directly coupled to the power source 220 such that no other components are between the power source 220 and the electrically conductive member 230.

In some embodiments, the source of electrical power provides 230 V AC. In some embodiments, the source of electrical power provides a power that depends on a desired temperature for the electrically conductive member. The method also involves providing a chemical mixture to an interior region of the electrically conductive member (Step 420). For example, as shown in FIG. 2, a fluidic input to the electrically conductive member 250 is capable of receiving a chemical mixture. In some embodiments, the chemical mixture is ozone, HF or any combination thereof.

The method also involves determining a predetermined temperature for the electrically conductive member (Step 430). In some embodiments, the predetermined temperature depends on the desired chemical reaction. For example, for a desired chemical reaction of destruction of ozone, the predetermined temperature is approximately 350° C. In various embodiments, the predetermined temperature depends on the chemical mixture, the volume of the chemical mixture, the type of material of the electrically conductive member, the size of the electrically conductive member, the shape of the electrically conductive member or any combination thereof (e.g., a shorter tube can require a higher temperature).

The method also involves determining a time duration during which the electrically conductive member should be heated (Step 440). The time duration can depend on the chemical mixture, the volume of the chemical mixture, the type of material of the electrically conductive member, the size of the electrically conductive member, the shape of the electrically conductive member, flow rate or any combination thereof. For example, for a low flow rate the heating and non-heating time relationship can be 50:50. An increase in flow rate can cause an increase in heating time. A decrease in flow rate can cause a decrease in heating time.

The method also involves heating the electrically conductive member to the predetermined temperature for the time duration (Step 450). For example, as shown in FIG. 2, a power source 220 is directly electrically coupled to the electrically conductive member 230 without a heating element there between. The power source 220 transmits power to the electrically conductive member 230 that is sufficient to cause the electrically conductive member 230 to heat to the desired temperature. The electrically conductive member 230 retains the chemical mixture to provide a chemical reactor for the chemical mixture and also provide heat to the chemical mixture. A separate heating element between the power source and the chemical reactor is not required to heat the chemical mixture.

In some embodiments, the method also involves cooling a portion of the electrically conductive member (Step 460) such that the chemical mixture is cooled. The chemical mixture can be cooled to a desired temperature. The desired temperature for the chemical mixture can be based on the chemical mixture, the volume of the chemical mixture, the type of material of the electrically conductive member, the size of the electrically conductive member, the shape of the electrically conductive member or any combination thereof. In some embodiments, a lower limit for the desired temperature depends on a dew point of the chemical mixture that avoids condensation within the electrically conductive member, In some embodiments, a higher limit for the desired temperature depends on an acceptable temperature level for off-gas to an exhaust system to be released.

In some embodiments, the portion of the electrically conductive member is cooled by water cooling. In various embodiments, the portion of the electrically conductive member is cooled by air cooling, liquid cooling (e.g. with oil), with heat exchanger, or any combination thereof.

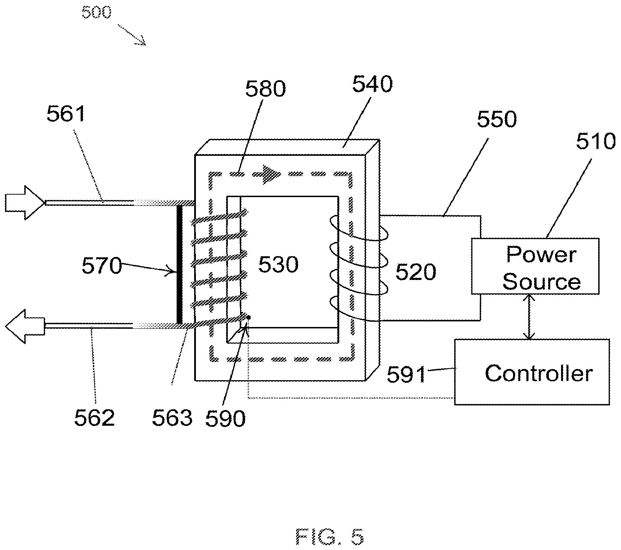

FIG. 5 is a schematic representation of a system 500 for facilitating a chemical reaction, according to an illustrative embodiment of the invention. The system 500 includes a temperature controller 591, a temperature sensor 590, an AC power source 510, an electrical connection 550, a transformer core 540, an electrically conductive member 563 having a fluidic input 561 and a fluidic output 562, and an electrical connection 570.

The power source 510 is in communication with the electrical connection 550 and the temperature controller 591. The electrical connection 550 winds around the transformer core 540 to complete a primary transformer winding. The electrically conductive member 563 winds around the transformer core 540 to complete a secondary transformer winding.

The temperature controller 591 is in communication with the AC power source 510 and the temperature sensor 590. In some embodiments, the temperature controller 591 is a thermostat. In some embodiments, the AC power source 510 is controlled by the temperature controller 591 to a temperature set point based on the measurement from the temperature sensor 590. The temperature sensor 590 can be any temperature sensor known in the art that can measure the temperature of the electrically conductive member 563. In some embodiments, the temperature sensor 590 is not present.

During operation, a chemical mixture is input to the electrically conductive member 563. The AC power source 510 provides an average voltage (e.g., 208 volts) to the electrical connection 550 to power the primary transformer winding on the transformer core 540. The electrical connection 550 creates a magnetic flux 580 within the transformer core 540. The magnetic flux 580 induces a current (e.g., 50 Amps) in the electrically conductive member 563, which also operates as the secondary for the transformer. The electrically conductive member 563 can operate as a low conductive electrical circuit. It is apparent to one of ordinary skill in the art that the ratio of primary windings to secondary windings can be adjusted to induce a desired current in the electrically conductive member 563.

The electrical connection 570 short circuits the electrically conductive member 563. Thus, an unheated chemical mixture that enters the fluidic input 561 is heated within the electrically conductive member 563 and exits the electrically conductive member 563 via the fluidic output 562. In some embodiments, the fluidic output 562 is an input for an unheated chemical mixture and the fluidic input 561 is an output for the heated chemical mixture.

In some embodiments, the average voltage supplied by the AC power source 510 depends on the desired temperature and/or conductivity of the electrically conductive member 563 and the turn ratio between the primary transformer winding, the electrical connection 550, and the secondary transformer winding, the electrically conductive member 563, of the transformer. For example, for ozone deconstruct, the desired temperature within the electrically conductive member is approximately 350° C.

While the invention has been particularly shown and described with reference to specific embodiments, it should be understood by those skilled in the art that various changes in form and detail may be made therein without departing from the scope of the invention as defined by the appended claims

## Claims

1. A method of facilitating a chemical reaction, the method comprising:
directly coupling an electrically conductive member and a source of electrical power (410), the electrically conductive member having an interior region configured to be substantially resistant to chemical corrosion and capable of retaining a chemical mixture therein;
providing the chemical mixture to the interior region of the electrically conductive member (420); and
heating the electrically conductive member to a predetermined temperature by controlling the electrical power applied to the electrically conductive member to cause a chemical reaction within the chemical mixture (450), **characterised in that** the chemical reaction is ozone destruction.

2. The method of claim 1, the method further comprising:
the interior region being configured to be resistant to ozone corrosion and capable of retaining ozone therein;
providing the ozone into the interior region of the electrically conductive member.

3. The method of claim 1 further comprising heating the electrically conductive member to a predetermined temperature that is greater than 200 degrees Celsius.

4. The method of claim 3 selecting the predetermined temperature (430, 440) based on the chemical mixture, the type of electrically conductive member, or any combination thereof.

5. The method of claim 1, further comprising cooling a section of the electrically conductive member (460) to cool the chemical mixture upon exiting the electrically conductive member.

6. The method of claim 1 wherein the electrically conductive member is a metallic tube.

7. The method of claim 1 wherein the electrically conductive member is single structure that is electrically and thermally conductive.

8. A system (200, 300, 500) for facilitating a chemical reaction, the system comprising:
a metallic tube (230) that is substantially resistant to chemical corrosion and capable of retaining a chemical mixture therein, the metallic tube (230) having a first section (310) and a second section (320);
a power source (220, 335, 510) directly electrically coupled to the metallic tube (230), the power source (220, 335, 510) being configured to heat the first section of the metallic tube (230);
a controller (210, 345, 591) electrically coupled to the power source (220, 335, 510), the controller controls power to the metallic tube (230) such that when the chemical mixture flows into the metallic tube (230) the chemical mixture is heated to cause a chemical reaction within the chemical mixture, **characterised in that** the power source (220, 335, 510) and the metallic tube (230) are coupled by direct induction of electrical power into the metallic tube (230).

9. The system (200, 300, 500) of claim 8 wherein the power source (220, 335, 510) and metallic tube (230) are coupled by connecting one or more electrical wires (240, 350) to the metallic tube (230) along the first section (310) of the metallic tube (230).

10. The system (200, 300, 500) of claim 8, wherein:
the metallic tube (230) is capable of retaining ozone therein; and
the controller (210, 345, 591) controls power to the metallic tube (230) such that when ozone flows into the metallic tube (230) the ozone is heated causing the ozone to destruct.

11. The system (200, 300, 500) of claim 8 wherein the metallic tube (230) is configured to complete a secondary winding a transformer (540).

12. The system (200, 300, 500) of claim 8 wherein direct induction is performed by eddy currents.

13. The system (200, 300, 500) of claim 8 further comprising a cooling section (325) connected to the metallic tube (230) along a second section (320) of the metallic tube (230).

14. The system (200, 300, 500) of claim 13 wherein the second section (320) of the metallic tube (230) is positioned relative to a coil shaped metallic tube (230) that has coolant flowing there through such that the second section (320) of the metallic tube (230) is cooled.

15. The system (200, 300, 500) of claim 13 wherein a heated section of the first section (310) of the metallic tube (230) that is connected to the second section (320) of the metallic tube (230) is in fluid connection with an inlet (330) of the first portion (310) of the metallic tube (230) such that heat from the heated section of the first section (310) of the metallic tube (310) heats the chemical mixture entering the first portion (310) of the metallic tube (230).

16. The system (200, 300, 500) of claim 8 wherein the metallic tube (230) is up to 15 meters in length.

17. The system (200, 300, 500) of claim 8 wherein the first section of the metallic tube, the second section of the metallic tube or both have a coil shape.

18. The system (200, 300, 500) of claim 8 wherein the power source (220, 335, 510) is a transformer.

19. The system (200, 300, 500) of claim 18 wherein the transformer has 10 loops on a secondary side of the transformer.

20. The system (200, 300, 500) of claim 8 wherein the power source (220, 335, 510) is a DC source.

21. The system (200, 300, 500) of claim 8 wherein the power source (220, 325, 510) is a switching power supply.

22. The system (200, 300, 500) of claim 8 wherein the power source (220, 325, 510) is a controlled source.

23. The system (200, 300, 500) of claim 8 wherein the temperature of the metallic tube (230) is controlled.

24. The system (200, 300, 500) of claim 8 wherein the temperature control is a closed loop control.

25. The system (200, 300, 500) of claim 19 further comprising a thermostat (360, 590) in connection with the transformer such that the thermostat (360, 590) controls the transformer to supply power to the metallic tube (230) to cause the metallic tube (230) to heat to the desired temperature.

## Patentansprüche

1. Verfahren zum Erleichtern einer chemischen Reaktion, wobei das Verfahren umfasst:
direktes Koppeln eines elektrisch leitenden Elements und einer Quelle elektrischen Stroms (410), wobei das elektrisch leitende Element einen Innenbereich aufweist, der so konfiguriert ist, dass er im Wesentlichen gegen chemische Korrosion beständig ist und in der Lage ist, eine chemische Mischung darin zurückzuhalten;
Bereitstellen der chemischen Mischung für den Innenbereich des elektrisch leitenden Elements (420); und
Erwärmen des elektrisch leitenden Elements auf eine vorbestimmte Temperatur durch Steuern des an das elektrisch leitende Element angelegten elektrischen Stroms, um eine chemische Reaktion innerhalb der chemischen Mischung (450) zu bewirken, **dadurch gekennzeichnet, dass** die chemische Reaktion eine Ozonzerstörung ist.

2. Verfahren nach Anspruch 1, das Verfahren ferner umfassend:
wobei der Innenbereich konfiguriert ist, um beständig gegen Ozonkorrosion zu sein und Ozon darin zurückzuhalten;
Bereitstellen des Ozons in den Innenbereich des elektrisch leitfähigen Elements.

3. Verfahren nach Anspruch 1, ferner umfassend das Erwärmen des elektrisch leitfähigen Elements auf eine vorbestimmte Temperatur, die größer als 200 Grad Celsius ist.

4. Verfahren nach Anspruch 3, bei dem die vorbestimmte Temperatur (430, 440) basierend auf dem chemischen Gemisch, der Art des elektrisch leitfähigen Elements oder einer beliebigen Kombination davon ausgewählt wird.

5. Verfahren nach Anspruch 1, ferner umfassend ein Kühlen eines Abschnitts des elektrisch leitfähigen Elements (460) zum Kühlen der chemischen Mischung beim Verlassen des elektrisch leitfähigen Elements.

6. Verfahren nach Anspruch 1, wobei das elektrisch leitfähige Element ein Metallrohr ist.

7. Verfahren nach Anspruch 1, wobei das elektrisch leitfähige Element eine einzelne Struktur ist, die elektrisch und thermisch leitfähig ist.

8. System (200, 300, 500) zum Erleichtern einer chemischen Reaktion, wobei das System umfasst:
ein Metallrohr (230), das im Wesentlichen beständig gegen chemische Korrosion ist und in der Lage ist, eine chemische Mischung darin zurückzuhalten, wobei das Metallrohr (230) einen ersten Abschnitt (310) und einen zweiten Abschnitt (320) aufweist;
eine Stromquelle (220, 335, 510), die direkt elektrisch mit dem Metallrohr (230) gekoppelt ist, wobei die Stromquelle (220, 335, 510) konfiguriert ist, um den ersten Abschnitt des Metallrohrs (230) zu erwärmen;
eine Steuerung (210, 345, 591), die elektrisch mit der Stromquelle (220, 335, 510) gekoppelt ist, wobei die Steuerung Strom an dem Metallrohr (230) so steuert, dass, wenn das chemische Gemisch in das Metallrohr (230) einströmt, das chemische Gemisch erwärmt wird, um eine chemische Reaktion innerhalb des chemischen Gemischs zu bewirken, **dadurch gekennzeichnet, dass** die Stromquelle (220, 335, 510) und das Metallrohr (230) durch direkte Induktion von elektrischem Strom in dem Metallrohr (230) gekoppelt sind.

9. System (200, 300, 500) nach Anspruch 8, wobei die Stromquelle (220, 335, 510) und das Metallrohr (230) durch Verbinden eines oder mehrerer elektrischer Drähte (240, 350) mit dem Metallrohr (230) entlang des ersten Abschnitts (310) des Metallrohrs (230) gekoppelt sind.

10. System (200, 300, 500) nach Anspruch 8, wobei:
das Metallrohr (230) in der Lage ist, Ozon darin zurückzuhalten; und
die Steuerung (210, 345, 591) den Strom zu dem Metallrohr (230) so steuert, dass, wenn Ozon in das Metallrohr (230) einströmt, das Ozon erwärmt wird und dabei bewirkt wird, dass das Ozon sich zerstört.

11. System (200, 300, 500) nach Anspruch 8, wobei das Metallrohr (230) konfiguriert ist, um eine Sekundärwicklung eines Transformators (540) zu vervollständigen.

12. System (200, 300, 500) nach Anspruch 8, wobei eine direkte Induktion durch Wirbelströme durchgeführt wird.

13. System (200, 300, 500) nach Anspruch 8, ferner umfassend einen Kühlabschnitt (325), der mit dem Metallrohr (230) entlang eines zweiten Abschnitts (320) des Metallrohrs (230) verbunden ist.

14. System (200, 300, 500) nach Anspruch 13, wobei der zweite Abschnitt (320) des Metallrohrs (230) in Bezug auf ein spiralförmiges Metallrohr (230) positioniert ist, durch das Kühlmittel fließt, so dass der zweite Abschnitt (320) des Metallrohrs (230) gekühlt wird.

15. System (200, 300, 500) nach Anspruch 13, wobei ein erwärmter Abschnitt des ersten Abschnitts (310) des Metallrohrs (230), der mit dem zweiten Abschnitt (320) des Metallrohrs (230) verbunden ist, in Fluidverbindung mit einem Einlass (330) des ersten Abschnitts (310) des Metallrohrs (230) steht, so dass Wärme aus dem erwärmten Abschnitt des ersten Abschnitts (310) des Metallrohrs (310) das in den ersten Abschnitt (310) des Metallrohrs (230) eintretende chemische Gemisch erwärmt.

16. System (200, 300, 500) nach Anspruch 8, wobei das Metallrohr (230) eine Länge von bis zu 15 Metern aufweist.

17. System (200, 300, 500) nach Anspruch 8, wobei der erste Abschnitt des Metallrohrs, der zweite Abschnitt des Metallrohrs oder beide eine Spulenform aufweisen.

18. System (200, 300, 500) nach Anspruch 8, wobei die Stromquelle (220, 335, 510) ein Transformator ist.

19. System (200, 300, 500) nach Anspruch 18, wobei der Transformator 10 Schleifen auf einer Sekundärseite des Transformators aufweist.

20. System (200, 300, 500) nach Anspruch 8, wobei die Stromquelle (220, 335, 510) eine Gleichstromquelle ist.

21. System (200, 300, 500) nach Anspruch 8, wobei die Stromquelle (220, 325, 510) eine Schaltstromquelle ist.

22. System (200, 300, 500) nach Anspruch 8, wobei die Stromquelle (220, 325, 510) eine gesteuerte Quelle ist.

23. System (200, 300, 500) nach Anspruch 8, wobei die Temperatur des Metallrohrs (230) gesteuert wird.

24. System (200, 300, 500) nach Anspruch 8, wobei die Temperatursteuerung eine Steuerung mit geschlossenem Kreis ist.

25. System (200, 300, 500) nach Anspruch 19 ferner umfassend einen Thermostat (360, 590) in Verbindung mit dem Transformator, so dass der Thermostat (360, 590) den Transformator steuert, um das Metallrohr (230) mit Strom zu versorgen, damit das Metallrohr (230) auf die gewünschte Temperatur erwärmt wird.

## Revendications

1. Un procédé destiné à faciliter une réaction chimique, le procédé comprenant :
le couplage direct d'un élément électriquement conducteur à une source d'alimentation électrique (410), l'élément électriquement conducteur ayant une région intérieure configurée pour être substantiellement résistante à la corrosion chimique et étant capable de confiner un mélange chimique ;
l'introduction du mélange chimique dans la région intérieure de l'élément électriquement conducteur (420) ; et
le chauffage de l'élément électriquement conducteur à une température prédéterminée par contrôle de l'alimentation électrique appliquée à l'élément électriquement conducteur pour provoquer une réaction chimique au sein du mélange chimique (450), **caractérisé en ce que** la réaction chimique est une destruction de l'ozone.

2. Le procédé de la revendication 1, dans lequel le procédé comprend en outre :
le fait que la région intérieure est configurée pour être résistante à la corrosion par l'ozone et être capable de confiner l'ozone ;
l'introduction de l'ozone dans la région intérieure de l'élément électriquement conducteur.

3. Le procédé de la revendication 1 comprenant en outre le chauffage de l'élément électriquement conducteur à une température prédéterminée qui est supérieure à 200 degrés Celsius.

4. Le procédé de la revendication 3 dans lequel la sélection de la température prédéterminée (430, 440) dépend du mélange chimique, du type d'élément électriquement conducteur, ou d'une quelconque combinaison des précédents.

5. Le procédé de la revendication 1, comprenant en outre le refroidissement d'une partie de l'élément électriquement conducteur (460) pour refroidir le mélange chimique lorsqu'il sort de l'élément électriquement conducteur.

6. Le procédé de la revendication 1 dans lequel l'élément électriquement conducteur est un tube métallique.

7. Le procédé de la revendication 1 dans lequel l'élément électriquement conducteur est une structure unique qui est électriquement et thermiquement conductrice.

8. Un système (200, 300, 500) destiné à faciliter une réaction chimique, le système comprenant :
un tube métallique (230) qui est substantiellement résistant à la corrosion chimique et qui est capable de confiner un mélange chimique, le tube métallique (230) ayant une première partie (310) et une seconde partie (320) ;
une source d'alimentation (220, 335, 510) directement couplée électriquement au tube métallique (230), la source d'alimentation (220, 335, 510) étant configurée pour chauffer la première partie du tube métallique (230) ;
un contrôleur (210, 345, 591) couplé électriquement à la source d'alimentation (220, 335, 510), le contrôleur contrôlant l'alimentation du tube métallique (230) de telle sorte que lorsque le mélange chimique s'écoule dans le tube métallique (230) le mélange chimique soit chauffé pour provoquer une réaction chimique au sein du mélange chimique, **caractérisé en ce que** la source d'alimentation (220, 335, 510) et le tube métallique (230) sont couplés par induction directe d'alimentation électrique au tube métallique (230).

9. Le système (200, 300, 500) de la revendication 8 dans lequel la source d'alimentation (220, 335, 510) et le tube métallique (230) sont couplés par connexion d'un ou plusieurs fils électriques (240, 350) au tube métallique (230) le long de la première partie (310) du tube métallique (230).

10. Le système (200, 300, 500) de la revendication 8, dans lequel :
le tube métallique (230) est capable de confiner de l'ozone ; et
le contrôleur (210, 345, 591) contrôle l'alimentation du tube métallique (230) de telle sorte que lorsque l'ozone s'écoule dans le tube métallique (230) l'ozone soit chauffé, provoquant la destruction de l'ozone.

11. Le système (200, 300, 500) de la revendication 8 dans lequel le tube métallique (230) est configuré pour fermer un enroulement secondaire d'un transformateur (540).

12. Le système (200, 300, 500) de la revendication 8 dans lequel l'induction directe est obtenue par des courants de Foucault.

13. Le système (200, 300, 500) de la revendication 8 comprenant en outre une partie de refroidissement (325) reliée au tube métallique (230) le long d'une seconde partie (320) du tube métallique (230).

14. Le système (200, 300, 500) de la revendication 13 dans lequel la seconde partie (320) du tube métallique (230) est située par rapport à un tube métallique en forme de serpentin (230) avec un réfrigérant passant dedans de telle sorte que la seconde partie (320) du tube métallique (230) soit refroidie.

15. Le système (200, 300, 500) de la revendication 13 dans lequel une partie chauffée de la première partie (310) du tube métallique (230) qui est reliée à la seconde partie (320) du tube métallique (230) est en communication de fluide avec une entrée (330) de la première partie (310) du tube métallique (230) de telle sorte que la chaleur provenant de la partie chauffée de la première partie du tube métallique (310) chauffe le mélange chimique entrant dans la première partie (310) du tube métallique (230).

16. Le système (200, 300, 500) de la revendication 8 dans lequel le tube métallique (230) a une longueur allant jusqu'à 15 mètres.

17. Le système (200, 300, 500) de la revendication 8 dans lequel la première partie du tube métallique, la seconde partie du tube métallique ou l'une et l'autre ont une forme de serpentin.

18. Le système (200, 300, 500) de la revendication 8 dans lequel la source d'alimentation (220, 335, 510) est un transformateur.

19. Le système (200, 300, 500) de la revendication 18 dans lequel le transformateur possède 10 enroulements d'un côté du secondaire du transformateur.

20. Le système (200, 300, 500) de la revendication 8 dans lequel la source d'alimentation (220, 335, 510) est une source en courant continu.

21. Le système (200, 300, 500) de la revendication 8 dans lequel la source d'alimentation (220, 325, 510) est une alimentation de puissance à découpage.

22. Le système (200, 300, 500) de la revendication 8 dans lequel la source d'alimentation (220, 325, 510) est une source contrôlée.

23. Le système (200, 300, 500) de la revendication 8 dans lequel la température du tube métallique (230) est contrôlée.

24. Le système (200, 300, 500) de la revendication 8 dans lequel le contrôle de température est un contrôle en boucle fermée.

25. Le système (200, 300, 500) de la revendication 19 comprenant en outre un thermostat (360, 590) relié au transformateur de telle sorte que le thermostat (360, 590) contrôle le transformateur pour délivrer l'alimentation au tube métallique (230) en faisant sorte que le tube métallique (230) chauffe à la température souhaitée.
